# EUROPEAN PATENT APPLICATION

(11) **EP 4 300 657 A1**
(43) Date of publication of application: **03.01.2024**
(21) Application number: 22759837.2
(22) Date of filing: 25.02.2022
(51) Int. Cl.: H01M 10/613, H01M 10/643, H01M 10/6554, H01M 50/213, H01M 50/342, H01M 50/35, H01M 50/367, H01M 50/534

(54) **POWER SUPPLY DEVICE**

(30) Priority: 26.02.2021 JP 2021030941
(71) Applicant: Panasonic Energy Co., Ltd., Osaka 570-8511 (JP)
(72) Inventor: KONDO, Hiroshi, Kadoma-shi, Osaka 571-0057 (JP); SAKAMOTO, Tomonori, Kadoma-shi, Osaka 571-0057 (JP); TSUTSUMI, Takuya, Kadoma-shi, Osaka 571-0057 (JP)
(74) Representative: Novagraaf International SA
(86) International application number: PCT/JP2022/008067
(87) International publication number: WO 2022/181803

(57) **Abstract**

A power supply device with enhanced safety is provided. A power supply device (100) includes secondary battery cells (1) each including a positive electrode (2) including a safety valve on one end surface of each cell, a battery holder holding the secondary battery cells (1) each including the positive electrode (2) on the one end surface thereof, and a housing (20) having a bottom surface (22), a top surface (23), and an inner space which accommodates the battery holder therein. The battery holder holds the secondary battery cells (1) upright in parallel to one another such that the positive electrode (2) on the one end surface of each cell (1) is directed vertically downward. In the housing (20), the battery holder retains the positive electrode (2) of each cell (1) spaced apart from the bottom surface (22) across a first space (SP1). In the above structure, the first space (SP1) between the positive electrode (2) of the secondary battery cell (1) and the bottom surface (22) is used as a space for discharging gas when the gas is discharged from the safety valve. In addition, when the power supply device (100) is submerged or exposed to water, the first space (SP1) keeps the positive electrode (2) spaced apart from the bottom surface (22) where water tends to accumulate, thereby enhancing safety.

## Description

### TECHNICAL FIELD

The present invention relates to a power supply device.

### BACKGROUND ART

A power supply device including a lot of secondary battery cells connected in series or parallel to one another is employed in a backup power source for a server or as a power supply device for the purpose of a stationary power storage for home use, business use, and factory use. Furthermore, the power supply device is employed in a power source for driving vehicles including hybrid vehicles, electric vehicles, electric carts, and electric scooters or for driving power-assisted bikes and electric tools.

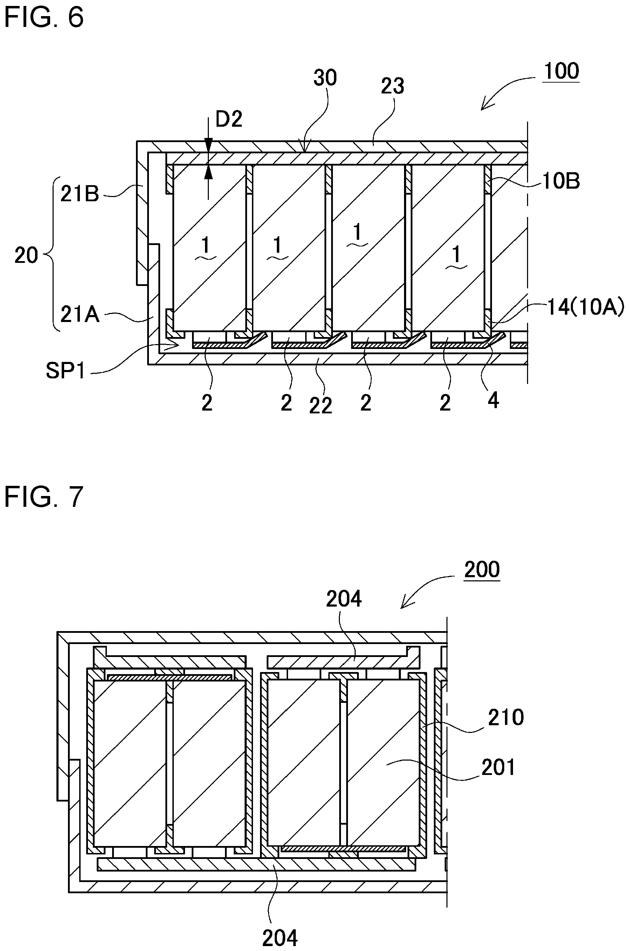

This type of power supply device increases the output power by connecting a lot of cylindrical secondary battery cells in series to one another. More specifically, as illustrated in power supply device 200 shown in FIG. 7, cylindrical secondary battery cells 201 are held upright by battery holder 210, and electrodes provided on end surfaces of each secondary battery cell 201 are connected to respective lead plates 204. On the other hand, a safety valve is often provided on a positive electrode side of each of secondary battery cells 201. The safety valve is configured to open when pressure increases inside secondary battery cell 201 due to abnormality, so as to discharge internal high-pressure gas outside. For this purpose, a gas duct is required to discharge gas in emergency on an end surface of the battery cell provided with the safety valve (in general, positive electrode side). As a result, a space is necessarily provided for arranging the duct on top and bottom parts of power supply device 200.

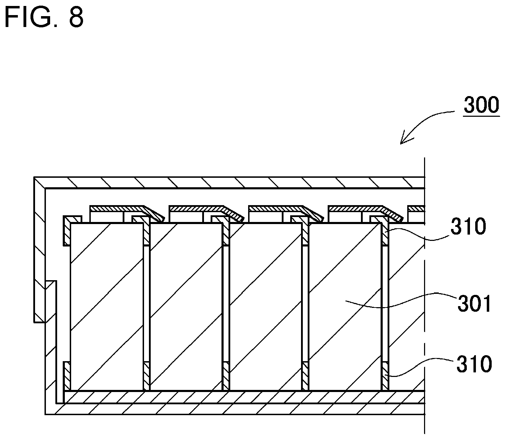

In contrast, as illustrated in power supply device 300 shown in FIG. 8, secondary battery cells 301 are held by battery holder 310 with all positive electrodes on the top surface, so that a space for providing the duct is required only on an upper part of secondary battery cells 301. This is assumed to contribute to reducing the height of power supply device 300. However, the inventor has found through testing that this structure may cause unintended short-circuiting when the power supply device is submerged in an unexpected situation. More specifically, in a test of immersing the power supply device in salt water and then removing the salt water from the power supply device, the inventor has confirmed generation of unusual heat after a few hours to several tens of hours due to moisture remaining inside the power supply device.

### Citation List

### Patent Literature

PTL 1: Japanese Patent Laid-Open Publication No. 2014-102968

### SUMMARY OF THE INVENTION

### Technical problem

One of objects of the present invention is to provide a power supply device having enhanced safety.

### Solution to Problem and Advantageous Effect of Invention

To achieve the above object, a power supply device in accordance with a first aspect of the present invention includes: a plurality of secondary battery cells, each of the plurality of secondary battery cells including a positive electrode on one end surface of the each of the plurality of secondary battery cells, the positive electrode including a safety valve; a battery holder holding the plurality of secondary battery cells upright in parallel to one another such that the positive electrode on the one end surface of the each of the plurality of secondary battery cells is directed vertically downward; and a housing having a bottom surface, a top surface, and an inner space which accommodates the battery holder therein. The battery holder retains the positive electrode of the each of the plurality of secondary battery cells spaced apart from the bottom surface across a first space. In the above structure, the first space provided between the positive electrode of each battery cell and the bottom surface is used as an exhaust space when gas is discharged from the safety valve. In addition, when the power supply device is submerged or immersed in water, the first space keeps the positive electrodes spaced apart from the bottom surface where water tends to accumulate, thereby enhancing safety.

In a power supply device according to a second aspect of the present invention, a height of the first space in the housing between the bottom surface and the end surface of the each of the plurality of secondary battery cells including the positive electrode is longer than a distance between the top surface of the housing and another end surface of the each of the plurality of secondary battery cells. In the above structure, the space for discharging gas from the safety valve is also used as a space to separate the secondary battery cells from the bottom surface. Such an efficient use of the space inside the housing reduces the height of the power supply device.

In a power supply device according to a third aspect of the present invention, a heat-conductive layer is disposed between the top surface of the housing and the another end surface of the each of the plurality of secondary battery cells, the heat-conductive layer being electrically insulative and thermally coupling the top surface to the another end surface of the each of the plurality of secondary battery cells. In this structure, the other end surface of the secondary battery cell disposed on a top surface side in the housing is thermally coupled with the heat-conductive layer. As a result, the secondary battery cell can achieve efficient heat dissipation.

In a power supply device according to a fourth aspect embodiment of the present invention, the heat-conductive layer has a sheet shape in any of the aforementioned structures. This structure provides a simple structure for thermally coupling the secondary battery cell with the housing via the heat-conductive layer.

In a power supply device according to a fifth aspect of the present invention, the battery holder includes a raising part provided on a surface of the battery holder facing the bottom surface of the housing, the raising part defining the first space. This structure facilitates separation of the battery holder from the bottom surface inside the housing via the raising part to secure the first space for discharging gas.

A power supply device according to a sixth aspect of the present invention further includes a lead plate provided on a side of the one end surface of the each of the plurality of secondary battery cells, the lead plate being fixed to the positive electrode of the each of the plurality of secondary battery cells and a negative electrode of one of the plurality of secondary battery cells. This structure allows the positive electrode to be connected to the negative electrode on the one end surface side of the secondary battery cell. As a result, the structure contributes to saving space, compared with a conventional structure of arranging the lead plate on both end surfaces of the secondary battery cell.

In a power supply device according to a seventh aspect of the present invention, the lead plate is made of an etched metal plate in any of the aforementioned structures. In this structure, the etched lead plate that can be easily customized allows connection of the positive electrode and the negative electrode on the same end surface of the secondary battery cell at an inexpensive cost.

In a power supply device according to an eighth aspect of the present invention, the battery holder includes a partitioning wall made of resin, the partitioning wall forming housing spaces, each of the housing spaces accommodating therein a corresponding one of the plurality of secondary battery cells. This structure allows isolation and insulation of each of adjacent secondary battery cells separately to enhance the safety.

In a power supply device according to a ninth aspect of the present invention, the battery holder is divided into a plurality of sub-holders, the one end surfaces of the each of the plurality of secondary battery cells is held by a corresponding one of the plurality of sub-holders such that the and expose a middle part of the each of the plurality of secondary battery cells from the battery holder. In this structure, exposed middle parts of the secondary battery cells can improve heat dissipation.

In a power supply device according to a tenth aspect of the present invention, the each of the plurality of secondary battery cells is provided with a cylindrical outer can in any of the aforementioned structures.

### BRIEF DESCRIPTION OF DRAWINGS

FIG. 1 is a perspective view of a power supply device in accordance with an exemplary embodiment of the present invention.
FIG. 2 is an exploded perspective view of the power supply device shown in FIG. 1.
FIG. 3 is an exploded perspective view of a battery unit shown in FIG. 2.
FIG. 4 is an exploded perspective view of the battery unit when viewed in an oblique lower direction.
FIG. 5 is a vertical sectional view of the power supply device taken along line V-V shown in FIG. 1.
FIG. 6 is an enlarged schematic sectional view of a key part of the power supply device shown in FIG. 5.
FIG. 7 is a schematic sectional view of a power supply device according to a comparative example.
FIG. 8 is a schematic sectional view of a power supply device according to another comparative example.

### DESCRIPTION OF EMBODIMENTS

Exemplary embodiments of the present invention will be described below with reference to the drawings. However, the exemplary embodiments described below are merely examples intended to embody technical ideas of the present invention and are not restrictive. Still more, parts and materials described in the exemplary embodiments do not limit parts and materials described in the scope of claims. In particular, dimensions, materials, shapes, their relative positions, or the like of components described in the exemplary embodiments are merely illustrative and not restrictive unless otherwise specified. Sizes and positional relationship of parts and materials illustrated in each drawing may be exaggerated for clear description. Furthermore, same names and same reference marks are given to parts and materials having same or substantially the same quality to omit their duplicate description. Each component of the present invention may be configured with a plurality of same parts and materials. Contrarily, a function of one component may be realized by a plurality of parts and materials.

The power supply device of the present invention is applicable to various purposes including a backup power source for a server, a power source supplying power to a drive motor installed in motor vehicles such as a hybrid vehicle and electric vehicle, a power source storing power generated by natural energy such as solar power generation and wind power generation, and a power source storing midnight electric power. In particular, the power supply device is employed as a power source suitable for high-power and high-current purposes. The power supply device used as the backup power source for the server will be described below as an exemplary embodiment of the present invention.

### Exemplary Embodiment 1

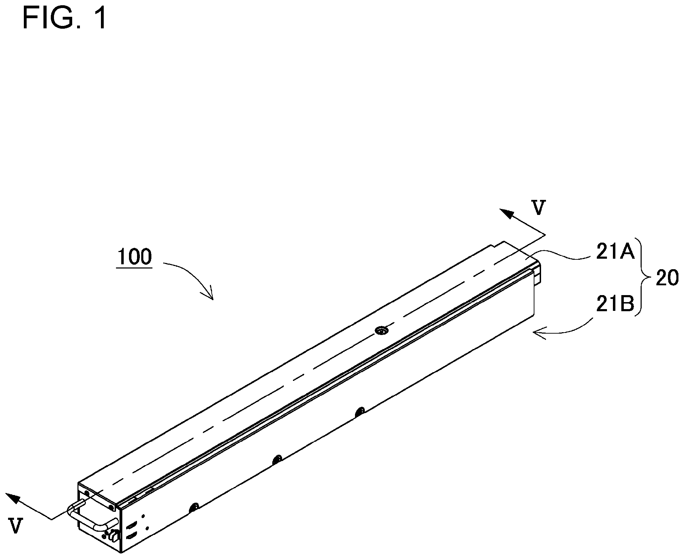

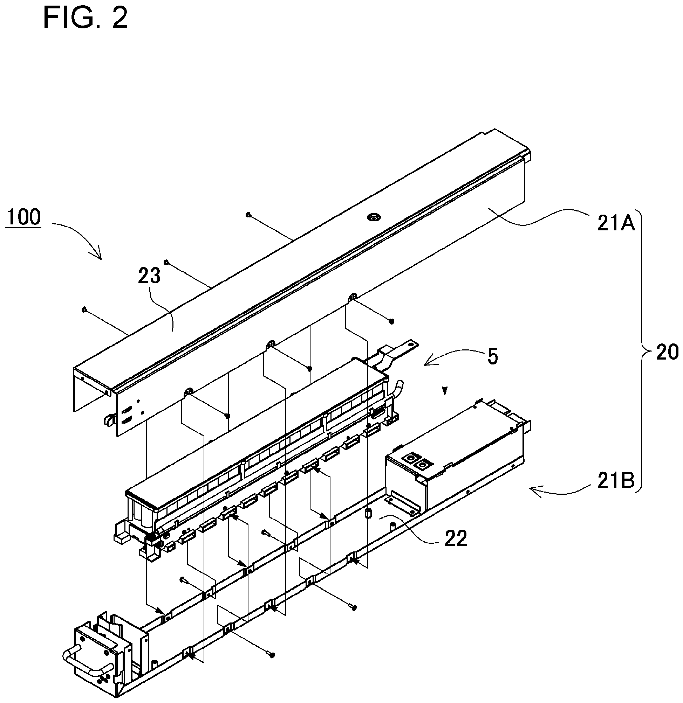

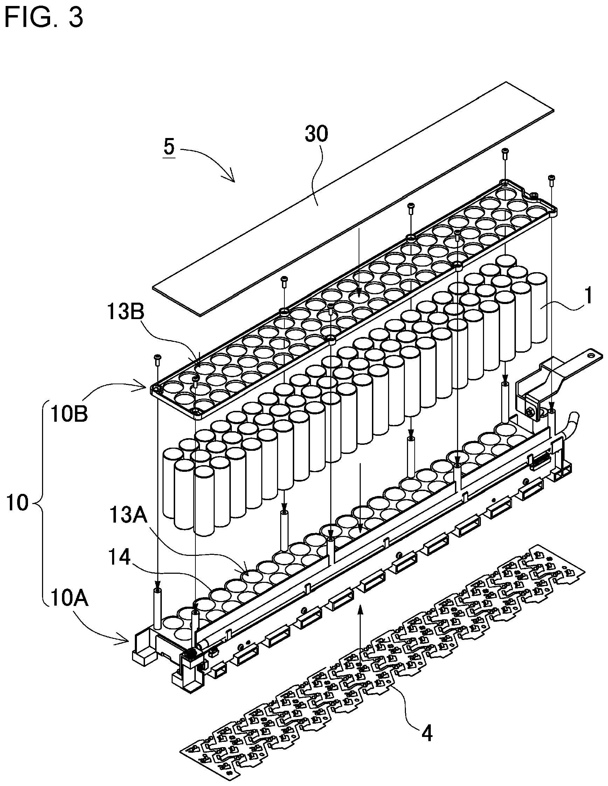

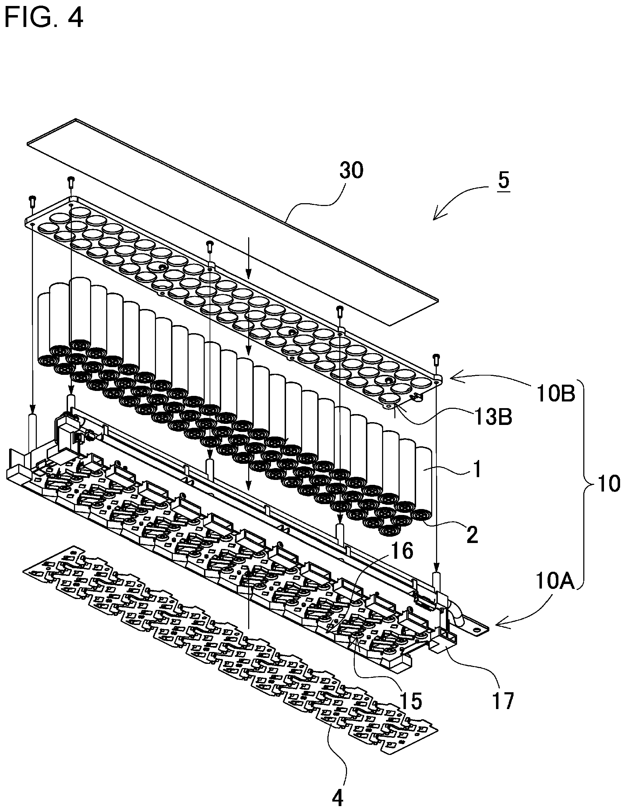

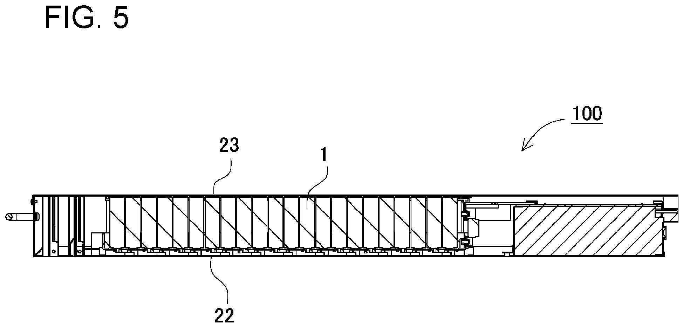

FIGs. 1 to 6 illustrate power supply device 100 in accordance with Exemplary Embodiment 1 of the present invention. In these drawings, FIG. 1 is a perspective view of power supply device 100 in accordance with embodiment 1 of the present invention. FIG. 2 is an exploded perspective view of power supply device 100 SHOWN in FIG. 1. FIG. 3 is an exploded perspective view of battery unit 5 shown in FIG. 2. FIG. 4 is an exploded perspective view of battery unit 5 shown in FIG. 3 when viewed in an oblique lower direction. FIG. 5 is a vertical sectional view of power supply device 100 taken along line V-V shown in FIG. 1. FIG. 6 is an enlarged schematic sectional view of a key part of power supply device 100 shown in FIG. 5. Power supply device 100 illustrated in these drawings includes housing 20 and battery unit 5 housed in housing 20.

### Housing 20

As illustrated in FIGs. 1 and 2, housing 20 is a hollow box and is made of, for example, a metal case. In an example shown in FIG. 1, housing 20 is divided into upper case 21A and lower case 21B to accommodate one or more battery units 5 therein. In an example shown in FIG. 2, upper case 21A has a cross section having a U-shape opening downward. Lower case 21B has a tray shape opening upward and is fixed onto upper case 21A by, e.g., screwing. Top surface 23 and bottom surface 22 of housing 20 defining an internal space are substantially flat surfaces. An insulation sheet is attached to inner surfaces of top surface 23 and bottom surface 22 as required to secure insulation.

### Battery Holder 10

As illustrated in exploded perspective views in FIGs. 3 and 4, battery unit 5 includes a lot of secondary battery cells 1 with cylindrical shapes, battery holder 10, and heat-conductive layer 30. Battery holder 10 holds secondary battery cells 1 upright in parallel to one another. Battery holder 10 includes sub-holders. Battery holder 10 is divided into upper holder 10B and lower holder 10A to vertically hold each of secondary battery cells 1. While secondary battery cells 1 are held by battery holder 10, as illustrated in the sectional view in FIG. 5, middle parts of secondary battery cells 1 are exposed from battery holder 10 to improve heat dissipation. Upper holder 10B and lower holder 10A are made of insulation material including resin material, such as polycarbonate and ABS. In the example, lower holder 10A includes partitioning wall 14 to demarcate housing spaces 13A each of which accommodates a corresponding one of secondary battery cells 1. Housing space 13A has a shape that follows a shape of an outer can of secondary battery cell 1. In the example, housing space 13A has a cylindrical shape. Partitioning wall 14 made of resin separates adjacent secondary battery cells 1 from each other, thereby enhancing insulation to enhance safety. Opening 15 is provided in a bottom side of lower holder 10A to expose positive electrode 2 of secondary battery cell 1. Secondary battery cells 1 are connected in series or parallel to one another with lead plate 4 while positive electrodes 2 are exposed from openings 15.

Upper holder 10B may have a shape similar to that of lower holder 10A, but may have a different shape. In the example in FIGs. 3 and 4, upper holder 10B is a sheet and holes are provided as housing spaces 13B through which ends of secondary battery cells 1 are inserted. Housing spaces 13B thus being thin secure a broad area for exposing peripheral areas of secondary battery cells 1 from battery holder 100 to enhance heat dissipation.

### Secondary Battery Cell 1

Secondary battery cell 1 is a cylindrical secondary battery cell including a cylindrical outer can. Both end surfaces of the cylindrical secondary battery cell are electrode surfaces. A safety valve is provided on one of the electrode surfaces. The safety valve is a component configured to open upon increasing of an inner pressure of the outer can in order to discharge internal gas. In general, the safety valve is provided on a side of positive electrode 2. However, the present invention does not limit the position of providing the safety device on the positive electrode side. Other positions, such as a negative electrode side, are acceptable. A cylindrical lithium-ion secondary battery is suitable for secondary battery cell 1. However, a battery pack of the present invention is not limited to cylindrical batteries for the secondary battery cells, and also not limited to lithium-ion secondary batteries. Any rechargeable batteries, such as nickel-hydrogen batteries and nickel-cadmium batteries, are applicable to the secondary battery cells.

### Lead Plate 4

As illustrated in FIG. 4, lead plate 4 is fixed on lower end surfaces of secondary battery cells 1. The secondary battery cells 1 are connected in series or parallel to one another via lead plate 4. Lead plate 4 is made of a metal sheet and welded onto secondary battery cells 1. Lead positioning guide 16 is provided on an outer surface of battery holder 10 along an outer shape of lead plate 4 so as to position lead plate 4 at a predetermined position. After inserting secondary battery cells 1 in housing spaces 13A of battery holder 10, lead plate 4 is positioned by lead positioning guide 16 with respect to electrode surfaces of secondary battery cells 1 exposed from battery holder 10, and fixed by laser welding, ultrasonic welding, or the like.

Lead plate 4 connects positive electrode 2 and a negative electrode of secondary battery cell1 on the same end surface side, i.e., on a bottom end surface side. In general, the cylindrical secondary battery has positive electrode 2 at the center of one end surface and the negative electrode around positive electrode 2. Therefore, lead plate 4 is welded in a state partially bent and protruded toward positive electrode 2, and another lead plate 4 is welded to a periphery of the end surface. This configuration allows positive electrode 2 and negative electrode to be connected on only one end surface of secondary battery cell 1. As compared with a structure of welding lead plate 204 on both sides of secondary battery cell 201 in power supply device 200 in FIG. 7, lead plate 4 of the embodiment provided only on one side reduces a space. In addition, since welding is required only on one side, manufacturing takt time can be reduced. Lead plate 4 is formed, for example, by etching a metal sheet. An etched lead plate has an advantage of realizing a complicated shape without requiring dies.

A circuit board may be provided on battery unit 5. The circuit board includes electronic circuits including a voltage detecting circuit for detecting an intermediate potential of a battery group in which secondary battery cells are connected in series or parallel to one another, a control circuit for controlling charge and discharge, and a safety circuit. The intermediate potential of secondary battery cells 1 connected in series to one another to configure the battery group is detected from a potential of lead plate 4 and is input to the voltage detecting circuit.

### Raising Part 17

Secondary battery cells 1 are held in battery holder in a posture that positive electrode 2 including the safety valve is directed downward as illustrated in the schematic sectional view in FIG. 6. First space SP1 separating the bottom end surface of secondary battery cell 1 from bottom surface 22 of housing 20 is formed on the bottom surface of battery holder 10. To secure first space SP1, battery holder 10 includes raising part 17 on a surface of battery holder 10 facing bottom surface 22 of housing 20. Raising parts 17 are provided spaced apart from one another along a periphery of battery holder 10 on the bottom surface side. Raising parts 17 are preferably formed unitarily with battery holder 10. However, raising parts 17 may be made of material different from the battery holder.

In the above structure, when gas is discharged from the safety valve provided on positive electrode 2 of secondary battery cell 1, a gas duct is formed to guide the discharged gas to outside power supply device 100. In addition, when power supply device 100 is submerged or exposed to water, positive electrode 2 is spaced apart from bottom surface 22 where moisture tends to accumulate. As a result, safety can be enhanced. As described above, the space is provided on the bottom end side, not on the top end side of secondary battery cell 1, and holding secondary battery cell 1 in a posture that the side of positive electrode 2 is directed downward. The gas discharge space is used as a space for protecting the electrodes from moisture, contributing to shorter power supply device 100. The height of first space SP1 is preferably larger than distance D2 between top surface 23 inside housing 20 and the top end surface of secondary battery cell 1. This further shortens the height of power supply device 100.

### Heat-Conductive Layer 30

Heat-conductive layer 30 is provided between top surface 23 inside housing 20 and the top end surfaces of secondary battery cells 1. Heat-conductive layer 30 thermally couples top surface 23 to the top end surfaces of secondary battery cells 1. Heat-conductive layer 30 is made of material with good heat conductivity. Heat-conductive layer 30 is electrically insulative to insulate the top end surfaces of secondary battery cells 1, such as negative electrode terminals, from metal housing 20. For example, a silicone resin sheet is preferably used for heat-conductive layer 30. Heat-conductive layer 30 with a sheet shape is fixed by attaching it to top surface 23 of housing 20 by, e.g., a double-sided tape.

A thickness of heat-conductive layer 30 is same as or slightly thicker than distance D2 to the top end surface of secondary battery cell 1. Heat-conductive layer 30 is preferably flexible so that heat-conductive layer 30 can be pressed between a top surface of secondary battery cell 1 and top surface 23 of housing 20 to eliminate any space. This prevents disturbance of heat-conductive due to an air layer formed inside. Heat-conductive layer 30 may be formed by applying, for example, uncured resin or adhesive material between each secondary battery cell and top surface 23 of housing 20 and curing it to form a layer, in addition to the use of a separate sheet component. As a result, generation of a gap can be reduced.

As described above, heat transferred to an upper part of secondary battery cells 1 by heat convection can be efficiently released by providing heat-conductive layer 30 on the top end surface side of secondary battery cells 1. In particular, conventional power supply device 100 generally provides a heatsink on the bottom end side of secondary battery cell 1 as illustrated in FIG. 8. Compared to the conventional structure, the structure according to the exemplary embodiment has a benefit of heat conductivity by releasing heat transferred to the upper part. Still more, the structure of providing the heatsink on the bottom side of secondary battery cells 1 may cause unintended short-circuiting due to water accumulated on the heatsink. However, in the structure according to the exemplary embodiment, as described above, a heat dissipation mechanism is provided on the top end surface side of secondary battery cells 1 and first space SP1 is provided on the bottom end surface side. Accordingly, a risk of exposure to water can be reduced to contribute to safety.

### INDUSTRIAL APPLICABILITY

A power supply device according to the present invention is effectively applicable to a backup power supply device capable of being installed in a power source module of a computer server. Still more, the power supply device according to the present invention is applicable to a backup power supply device for radio substations such as for mobile phones, home-use and factory-use power source for power storage, power source for street lamps, a power storage device combined with solar battery, a backup power supply for traffic signals, and power source for plug-in hybrid electric vehicles switchable between EV travel mode and HEV travel mode, hybrid electric vehicles, and electric vehicles.

### REFERENCE MARKS IN THE DRAWINGS

- 100, 200, 300: power supply device
- 1, 201, 301: secondary battery cell
- 2: positive electrode
- 4, 204: lead plate
- 5: battery unit
- 10, 210, 310: battery holder
- 10A: lower holder
- 10B: upper holder
- 13A, 13B: housing space
- 14: partitioning wall
- 15: opening
- 16: lead positioning guide
- 17: raising part
- 20: housing
- 21A: upper case
- 21B: lower case
- 22: bottom surface
- 23: top surface
- 30: heat-conductive layer
- SP1: first space
- D2: distance

## Claims

1. A power supply device comprising:
a plurality of secondary battery cells, each of the plurality of secondary battery cells including a positive electrode on one end surface of the each of the plurality of secondary battery cells, the positive electrode including a safety valve;
a battery holder holding the plurality of secondary battery cells upright in parallel to one another such that the positive electrode on the one end surface of the each of the plurality of secondary battery cells is directed vertically downward; and
a housing having a bottom surface, a top surface, and an inner space which accommodates the battery holder therein, wherein
the battery holder retains the positive electrode of the each of the plurality of secondary battery cells spaced apart from the bottom surface across a first space.

2. The power supply device according to claim 1, wherein a height of the first space in the housing between the bottom surface and the end surface of the each of the plurality of secondary battery cells including the positive electrode is longer than a distance between the top surface of the housing and another end surface of the each of the plurality of secondary battery cells.

3. The power supply device according to claim 2, further comprising a heat-conductive layer disposed between the top surface of the housing and the another end surface of the each of the plurality of secondary battery cells, the heat-conductive layer being electrically insulative and thermally coupling the top surface to the another end surface of the each of the plurality of secondary battery cells.

4. The power supply device according to claim 3, wherein the heat-conductive layer has a sheet shape.

5. The power supply device according to any one of claims 1 to 4, wherein the battery holder includes a raising part provided on a surface of the battery holder facing the bottom surface of the housing, the raising part defining the first space.

6. The power supply device according to any one of claims 1 to 5, further comprising a lead plate provided on a side of the one end surface of the each of the plurality of secondary battery cells, the lead plate being fixed to the positive electrode of the each of the plurality of secondary battery cells and a negative electrode of one of the plurality of secondary battery cells.

7. The power supply device according to claim 6, wherein the lead plate is made of an etched metal sheet.

8. The power supply device according to any one of claims 1 to 7, wherein the battery holder includes a partitioning wall made of resin, the partitioning wall forming housing spaces, each of the housing spaces accommodating therein a corresponding one of the plurality of secondary battery cells.

9. The power supply device according to any one of claims 1 to 8, wherein the battery holder is divided into a plurality of sub-holders, the one end surfaces of the each of the plurality of secondary battery cells is held by a corresponding one of the plurality of sub-holders such that the and expose a middle part of the each of the plurality of secondary battery cells from the battery holder.

10. The power supply device according to any one of claims 1 to 9, wherein the each of the plurality of secondary battery cells is provided with a cylindrical outer can.
